Europäisches Patentamt

European Patent Office

Office européen des brevets

(11) Numéro de publication: **0 003 919**
**A1**

## (12) DEMANDE DE BREVET EUROPEEN

(21) Numéro de dépôt: **79400051.3**

(22) Date de dépôt: **25.01.79**

(51) Int. Cl.²: **B 60 V 1/00**

(30) Priorité: **16.02.78 FR 7804340**

(43) Date de publication de la demande:
**05.09.79 Bulletin 79/18**

(84) Etats contractants désignés:
**DE FR GB IT NL SE**

(71) Demandeur: **Peissel, Michel F.**
**Fragne Verneix**
**F-03190 Herisson(FR)**

(72) Inventeur: **Peissel, Michel F.**
**Fragne Verneix**
**F-03190 Herisson(FR)**

(54) **Jupe simplifiée pour véhicules sur coussin d'air.**

(57) Jupe de type simplifié adaptable à tous véhicules ou objets à deplacer sur coussin d'air, formée sur blocs à même le véhicule.

Cette jupe est constituée d'une pièce de tissu (1) posé à plat et tendue sur des blocs en bois (4) disposés temporairement aux angles du perimètre de base de l'objet ou véhicule à deplacer (3), ces blocs ayant la profondeur de la jupe desirée. Le tissu est ensuite drapé autour des blocs et repris et fixé au perimètre de base du véhicule ou objet à deplacer. Le sac ainsi formé est ouvert suivant un decoupage dans sa partie horizontale suivant le perimètre de base mais avec les angles arondis et d'un diamètre inferieur au perimètre de base. Il en resulte une jupe peripherique aux parfois concaves et de geometrie stable.

L'invention peut servir aut deplacement sur coussin d'air de jouets, de palettes de manutention ou le deplacement d'objets exceptionels (maisons, reservoirs).

Fig. 7

EP 0 003 919 A1

- 1 -

## Jupe simplifiée pour véhicules sur coussin d'air

La présente invention est une alternative simple aux différents types connus de jupes de véhicules sur coussin d'air; c'est à dire une membrane flexible pouvant contenir l'air sous pression d'un véhicule à effet au sol.

Les jupes connues de véhicules sur coussin d'air sont de trois types principaux; les jupes dites coniques (brevet Bertin), les jupes dites à doigts (brevet du National Research and Development Council NRDC), et les jupes sac ou présurisées. Ces trois types de jupes sont complexes et donc onéreuses. D'une part les jupes coniques devant être multiples pour se conformer à des véhicules de forme rectangulaire, d'autre part les jupes "à doigts" possèdent de très nombreux panneaux, alors que la jupe sac exige des coutures ou soutures selon des courbes de dévelopement complexe. Il en resulte que pour déplacer un objet, une plateforme ou un véhicule sur coussin d'air cela necéssite la taille onéreuse de jupes faites sur mesure selon des patrons difficiles a realiser. Soit donc un haut prix de revient pour un article susceptible d'être facilement dechiré ou devant bien souvent ne servir que pour le déplacement d'un objet sur une courte distance.

La présente invention permet de fabriquer en quelques instants
une jupe adaptée a toutes les formes de véhicules ou d'objets à
déplacer puisqu'elle trouve automatiquement sa geometrie par pliage et drapage sur l'objet même a soulever ou sur un garabit de cet
objet ou de son perimetre de base. Cela sans néccssiter de coutures, de calculs de déroulements ou de patrons.

Le procédé consiste a placer au coins ou au long des courbes du
perimetre inferieur de l'appareil ou de l'objet a deplacer (ou d'un
garabit de ce perimetre) retourne vers le haut, des blocs de bois
ou d'autre materiel, ces blocs ayant une hauteur égale a la profondeur de jupe desirée. On tend ensuite a plat sur ces blocs le tissu
de jupe pour le laisser retomber  tout autour jusqu'au perimètre
inferieur de l'objet à deplacer. Le tissu est alors fixé à ce perimètre les plis étant collés ou cerclés contre ce perimetre. Ceci
étant fait l'on obtient comme un sac moulé sur les blocs, on procède
alors à la decoupe de la partie horizontale de ce sac selon un trace
similaire à celui du perimètre d'attache mais aux angles arrondis et
de diamètre inferieur. Ce decoupage aux angles arrondis de même que
la tension du tissu de la surface ainsi decoupée, assure à la jupe
peripherique le maintient de sa geometrie lorsqu'elle est préssurisée.
Il suffit ensuite d'enlever les blocs et la jupe est prête a fonctionner. Sans couture, sans patron ce type de jupe est économique
et adaptable aux objets et formes les plus étranges, à peu de frais.

La description qui va suivre en regard des dessins annexes donnés à titre d'exemple non limitatifs permettra de bien comprendre comment l'invention peut être realisée.

Fig.1 a 4 Vue en perspective de la jupe terminée.

Fig.6 Vue en coupe.

On voit sur les figures :

En 1 le tissu de la jupe.

En 2 la base retournée d'un véhicule.

En 3 le perimètre d'attache.

En 4 les blocs en bois qui donnent la forme.

En 5 un ventilateur de mise en pression.

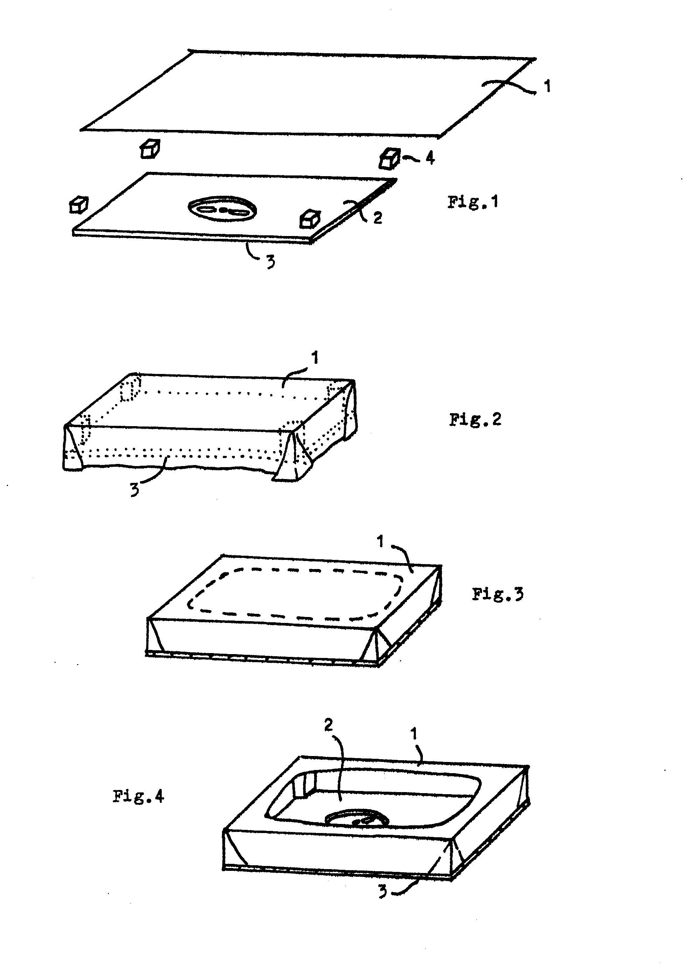

Fig.2 et 3 montrent deux étapes succéssives du drapage de la jupe.

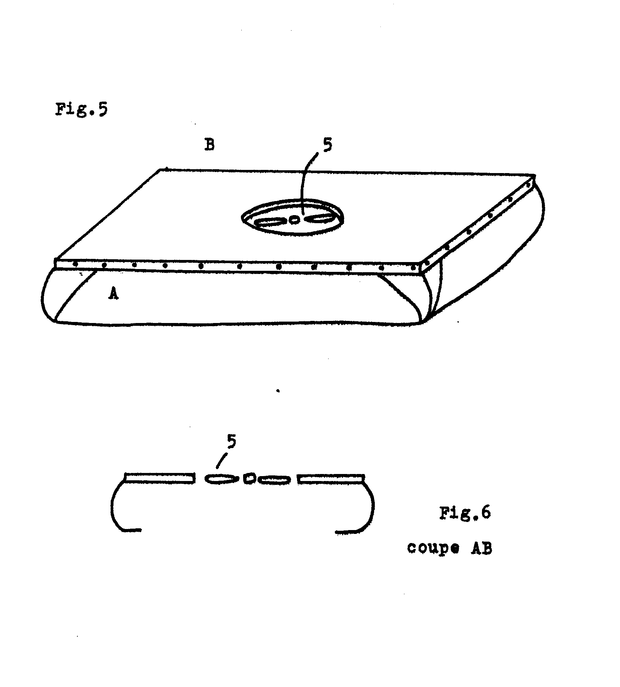

Fig.4 montre le tissu decoupé.

Fig.5 après enlèvement des blocs la plateforme retournée et mise en pression du coussin d'air.

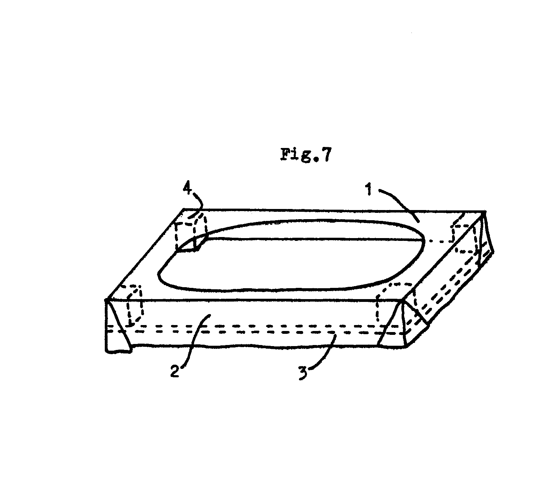

Fig.6 On remarque que la jupe forme un anneau périphérique concave vers l'interieur et dont la partie inférieure est à plat sur le sol.

Le dispositif objet de l'invention peut être utilisé sur tous les véhicules à coussin d'air et pour tout déplacement d'objet sur coussin d'air s'appliquant plus particulièrement aux deplacements sur surfaces sèches et relativement depourvues d'obstacles movibles (pierres) c'est à dire sur parquets, routes, cours cimentées ou sur terrains relativement plats. La simplicité de ce type de jupe la destine a des applications allant du jouet au déplacement d'objets extraordinnaires; maisons, grandes citernes, reservoirs, ceci par le fait de son adaptation à toutes sortes de formes et de par la rapidité et l'économie de sa réalisation.

REVENDICATIONS DE BREVET

1- Dispositif (jupe) pour contenir un coussin d'air sous n'importe quel véhicule ou objet à deplacer, caracterisé par sa geometrie stable obtenue par l'effet jumelé du simple drapage d'un tissu (1) sur des blocs, (4) marquant le perimètre inferieur de l'objet ou du vehicule a mouvoir, (3)et la forme arrondie de la découpe de la partie horizontale de cette jupe.

2- Dispositif selon la revendication 1, caracterisé par *le fait que*/la forme et la profondeur de la jupe sont determinées par la dimension et l'emplacement des blocs (4), disposés sur le perimètre inferieur de l'objet à deplacer ou d'un garabit du perimètre de cet objet.

3- Dispositif selon la revendication 1, caracterisé par le fait qu'une simple piece de tissu plat (1) est employée pour obtenir la forme voulue.

4- Dispositif selon la revendication 1, caracterisé par le fait que la forme de la jupe est obtenue par pliage ou drapage ou moulage du tissu sur une forme ou un moule ou des blocs ou toute autre matrice.

5- Dispositif selon la revendication 1, caracterisé par l'emploi d'angles arrondis de la decoupe de la portion horizontale de la jupe pour maintenir sa geometrie lorsqu'elle est sous pression, ces angles arrondis servant d'arcs tenseurs evitant l'écartement vers l'extérieur des rebords de la jupe.

6- Dispositif selon la revendication 1, caracterisé par la concavité de l'anneau peripherique de la jupe et l'horizontalité par rapport au sol de sa ligne de contact. (Fig.6)

7- Dispositif selon la revendication 1, caracterisé par le fait que sa geometrie est maintenue par la tension exercée par la face horizontale de contact de cette jupe avec le sol.

8- Procedé de fabrication du dispositif selon 1, caracterisé par l'utilisation de blocs ou de formes sur lesquelles le tissu est drapé ou moulé pour obtenir sa forme et sa geometrie stable.

Fig.1

Fig.2

Fig.3

Fig.4

Fig.5

B        5

A

5

Fig.6

coupe AB

Fig.7

0003919

| DOCUMENTS CONSIDERES COMME PERTINENTS | | | CLASSEMENT DE LA DEMANDE (Int. Cl.²) |
|---|---|---|---|
| Catégorie | Citation du document avec indication, en cas de besoin, des parties pertinentes | Revendica-tion concernée | |
| | GB - A - 1 326 001 (AIR CUSHION EQUIPMENT) <br><br> * Page 1, lignes 14-32; page 2, lignes 44-57 * <br><br> ---- | 1,3 | B 60 V 1/00 |

**DOMAINES TECHNIQUES RECHERCHES (Int. Cl.²)**

B 60 V 1/00

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 21-05-1979 | HAUGLUSTAINE |

OEB Form 1503.1   06.78